# EUROPEAN PATENT SPECIFICATION

(11) **EP 3 955 534 B1**
(45) Date of publication and mention of the grant of the patent: **25.11.2026**
(21) Application number: 20799113.4
(22) Date of filing: 17.01.2020
(51) Int. Cl.: H04L 25/02, H04B 3/54

(54) **COMMUNICATION METHOD AND COMMUNICATION DEVICE**
KOMMUNIKATIONSVERFAHREN UND KOMMUNIKATIONSVORRICHTUNG
PROCÉDÉ ET DISPOSITIF DE COMMUNICATION

(30) Priority: 30.04.2019 CN 201910360061
(43) Date of publication of application: 16.02.2022
(73) Proprietor: Huawei Technologies Co., Ltd., Shenzhen, Guangdong 518129 (CN)
(72) Inventor: HUANG, Yadong, Shenzhen, Guangdong 518129 (CN); ZENG, Yan, Shenzhen, Guangdong 518129 (CN)
(74) Representative: Pfenning, Meinig & Partner mbB
(86) International application number: PCT/CN2020/072859
(87) International publication number: WO 2020/220769

(56) References cited:
- WO-A1-2011/009128
- CN-A- 1 736 035
- CN-A- 102 893 678
- CN-A- 105 122 715
- US-A1- 2011 317 723
- US-A1- 2013 044 828

## Description

### TECHNICAL FIELD

This application relates to the field of power line communication technologies, and in particular, to a communication method and a communication apparatus.

### BACKGROUND

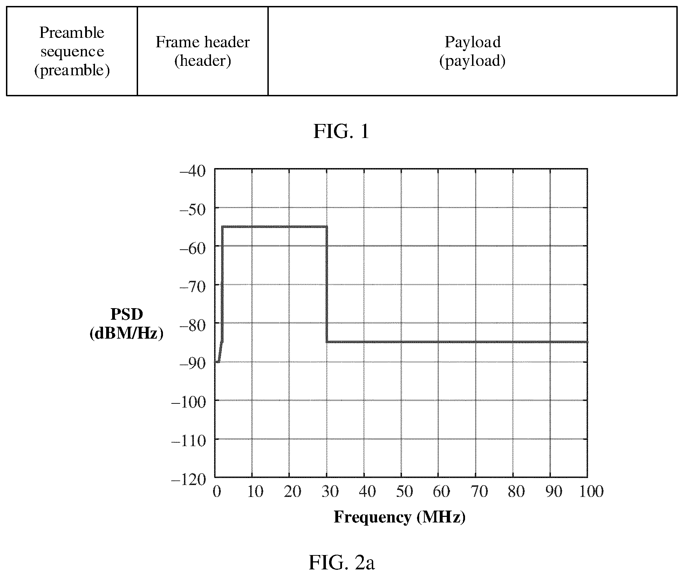

Currently, a data frame may include a preamble sequence (preamble), a frame header (header), and a payload (payload) as shown in FIG. 1 in power line communication (power line communication, PLC). In a conventional technology, when a transmit end device sends a data frame to a receive end device, a same power spectral density (power spectral density, PSD) is used for all parts of the data frame such as a preamble sequence, a frame header, and a payload.

Limited by total transmitted power of devices, power corresponding to the PSD used when the transmit end device sends the data frame to the receive end device falls within a specific frequency range. In the conventional technology, the power corresponding to the PSD used when the transmit end device sends the data frame to the receive end device usually falls within a low-frequency range or a high-frequency range. Consequently, flexibility of sending the data frame in the existing PLC is poor.

US2013044828 A1 discloses a method of arranging a frame for power reduction, utilized in a transmitter in a communication system. The transmitter communicates with a receiver in the communication system. The method comprises generating a preamble with a first power level in the frame; arranging a header with the first power level after the preamble in the frame, wherein the header comprises information of a second power level; arranging an additional channel estimation (ACE) symbol with the second power level after the header in the frame; and arranging a first payload with the second power level after the ACE symbol in the frame.

US2011317723 A1 discloses that a power-line communications (PLC) device communicates with a second PLC device via a PLC medium and includes a transmitter and a receiver. The transmitter transmits a Request to Send (RTS) communication to the second PLC device at a first power level. The receiver receives a Clear to Send (CTS) communication from the second PLC device. The transmitter transmits data to the second PLC device at a second power level that is less than the first power level. The transmitter transmits a TDM frame to the second PLC device that includes a preamble and header transmitted at a first power level and at least one special data symbol and a payload transmitted at a second power level that is less than the first power level. The special data symbol resides between the preamble or header and the payload and is usable by the second PLC device for processing of the payload.

### SUMMARY

The invention is defined by the independent claims. Preferable embodiments are defined by the dependent claims. Embodiments of this application provide a communication method and a communication apparatus, to help improve flexibility of sending a data frame in PLC.

According to a non-claimed first example to understand the present application, a communication method is provided. The method includes the following content.

A transmit end device generates a data frame, sends a first preamble sequence and a frame header of the data frame through a power line by using a first PSD, and sends additional channel estimation information and a payload of the data frame through the power line by using a second PSD. The first PSD is different from the second PSD.

The data frame includes the first preamble sequence, the frame header, the additional channel estimation information, and the payload. The first preamble sequence is used at least for synchronization. The frame header includes first indication information, and the first indication information is used to indicate that a type of the data frame is a first data-frame type. The additional channel estimation information is located between the frame header and the payload and is carried on at least one symbol.

In this example of this application, different parts of the data frame may be sent through the power line by using different PSDs. This helps improve flexibility of sending the data frame in PLC compared with a manner of sending the data frame in a conventional technology.

In a possible design, the frame header further includes second indication information, and the second indication information is used to indicate a quantity of symbols carrying the additional channel estimation information and a type of the symbols carrying the additional channel estimation information. This helps a receive end device identify the additional channel estimation information.

In a possible design, power corresponding to the first PSD falls within a first frequency range, power corresponding to the second PSD falls within a second frequency range, and an upper limit of the first frequency range is less than or equal to a lower limit of the second frequency range. This helps achieve long-distance transmission coverage and reduce impact of noise from an electrical appliance on payload transmission.

In a possible design, the at least one symbol includes a first part and a second part. The first part is used for automatic gain control (AGC), and the second part is used for channel estimation. This helps simplify an implementation.

In a possible design, the at least one symbol carrying the additional channel estimation information is a second preamble sequence, and the second preamble sequence includes at least one first preamble sequence. Alternatively, the at least one symbol carrying the additional channel estimation information is at least two additional channel estimation (ACE) symbols. This helps further simplify an implementation.

According to a first aspect, an embodiment of this application provides another communication method. The method includes the following content.

A receive end device receives a first preamble sequence and a frame header of a data frame within a first frequency range, and demodulates the frame header based on the first preamble sequence. Power corresponding to a first power spectral density (PSD) falls within the first frequency range. The receive end device demodulates a payload of the data frame based on additional channel estimation information of the data frame when the frame header includes first indication information. The additional channel estimation information and the payload are received within a second frequency range, power corresponding to a second PSD falls within the second frequency range, the first PSD is different from the second PSD, the additional channel estimation information is located between the frame header and the payload and is carried on at least one symbol, and the first indication information is used to indicate that a type of the data frame is a first data-frame type.

In this embodiment of this application, different parts of the data frame may be sent through a power line by using different PSDs. This helps improve flexibility of sending the data frame in PLC compared with a manner of sending the data frame in a conventional technology. In addition, the payload may be demodulated based on the additional channel estimation information. This helps increase a probability of successfully demodulating the payload.

In a possible design, the frame header further includes second indication information, and the second indication information is used to indicate a quantity of symbols carrying the additional channel estimation information and a type of the symbols carrying the additional channel estimation information. This helps the receive end device identify the additional channel estimation information.

In a possible design, an upper limit of the first frequency range is less than or equal to a lower limit of the second frequency range. This helps achieve long-distance transmission coverage and reduce impact of noise from an electrical appliance on payload transmission.

In a possible design, the symbols carrying the additional channel estimation information are a second preamble sequence, and the second preamble sequence includes at least one first preamble sequence. Alternatively, the symbols carrying the additional channel estimation information are at least two additional channel estimation (ACE) symbols. This helps simplify an implementation.

In a possible design, the at least one symbol carrying the additional channel estimation information includes a first part and a second part. The first part is used for automatic gain control (AGC), and the second part is used for channel estimation.

The receive end device may demodulate the payload of the data frame based on the additional channel estimation information of the data frame in the following manner when the frame header includes the first indication information:
The receive end device determines first received power based on the first part when the frame header includes the first indication information. The first received power is received power of the first part. When the first received power meets a preset condition, the receive end device determines that a second gain is a first gain. The second gain is a gain used to demodulate the payload, and the first gain is a gain used to demodulate the frame header. Then, the receive end device performs channel estimation based on the second part, to obtain a channel estimation result, and demodulates the payload based on the second gain and the channel estimation result. This helps increase a probability of successfully demodulating the payload.

In a possible design, when the first received power does not meet the preset condition, the receive end device adjusts the first gain based on the additional channel estimation information, to obtain the second gain. This helps further increase the probability of successfully demodulating the payload.

In a possible design, that the first received power meets a preset condition includes: $\left|10⋅log10\left(\frac{{P}_{1}}{{P}_{2}}\right)\right| \leq S .$

P₁ is the first received power, P₂ is second received power, the second received power is received power of the first preamble sequence, and S is a preset threshold. This helps simplify an implementation.

According to a non-claimed second example to understand the present application, a communication apparatus is provided. The communication apparatus may be a power line communication device, may be an apparatus in a power line communication device, or may be an apparatus that can match a power line communication device. The apparatus may include a processor and a transceiver. The processor and the transceiver may perform corresponding functions in the method according to any one of the first example and the designs of the first example. Details are as follows.

The processor is configured to generate a data frame. The data frame includes a first preamble sequence, a frame header, additional channel estimation information, and a payload. The first preamble sequence is used at least for synchronization. The frame header includes first indication information, and the first indication information is used to indicate that a type of the data frame is a first data-frame type. The additional channel estimation information is located between the frame header and the payload and is carried on at least one symbol. The transceiver is configured to: send the first preamble sequence and the frame header through a power line by using a first PSD, and send the additional channel estimation information and the payload through the power line by using a second PSD. The first PSD is different from the second PSD.

In a possible design, the frame header further includes second indication information, and the second indication information is used to indicate a quantity of symbols carrying the additional channel estimation information and a type of the symbols carrying the additional channel estimation information.

In a possible design, power corresponding to the first PSD falls within a first frequency range, power corresponding to the second PSD falls within a second frequency range, and an upper limit of the first frequency range is less than or equal to a lower limit of the second frequency range.

In a possible design, the at least one symbol carrying the additional channel estimation information includes a first part and a second part. The first part is used for automatic gain control (AGC), and the second part is used for channel estimation.

In a possible design, the at least one symbol carrying the additional channel estimation information is a second preamble sequence, and the second preamble sequence includes at least one first preamble sequence. Alternatively, the at least one symbol carrying the additional channel estimation information is at least two additional channel estimation (ACE) symbols.

According to a second aspect, an embodiment of this application provides another apparatus. The apparatus may be a power line communication device, may be an apparatus in a power line communication device, or may be an apparatus that can match a power line communication device. The apparatus may include a processor and a transceiver. The processor and the transceiver may perform corresponding functions in the method according to any one of the first aspect and the designs of the first aspect. Details are as follows.

The processor is configured to: demodulate a frame header based on a first preamble sequence after the transceiver receives the first preamble sequence and the frame header of a data frame within a first frequency range, and demodulate a payload of the data frame based on additional channel estimation information of the data frame when the frame header includes first indication information.

The additional channel estimation information and the payload are received by the transceiver within a second frequency range, power corresponding to a first power spectral density (PSD) falls within the first frequency range, power corresponding to a second PSD falls within the second frequency range, the first PSD is different from the second PSD, the additional channel estimation information is located between the frame header and the payload and is carried on at least one symbol, and the first indication information is used to indicate that a type of the data frame is a first data-frame type.

In a possible design, the frame header further includes second indication information, and the second indication information is used to indicate a quantity of symbols carrying the additional channel estimation information and a type of the symbols carrying the additional channel estimation information.

In a possible design, an upper limit of the first frequency range is less than or equal to a lower limit of the second frequency range.

In a possible design, the at least one symbol carrying the additional channel estimation information is a second preamble sequence, and the second preamble sequence includes at least one first preamble sequence. Alternatively, the at least one symbol carrying the additional channel estimation information is at least two additional channel estimation (ACE) symbols.

In a possible design, the at least one symbol carrying the additional channel estimation information includes a first part and a second part. The first part is used for automatic gain control (AGC), and the second part is used for channel estimation.

That the processor is configured to demodulate a payload of the data frame based on additional channel estimation information of the data frame when the frame header includes first indication information specifically includes:
The processor is configured to: determine first received power based on the first part when the frame header includes the first indication information, where the first received power is received power of the first part; when the first received power meets a preset condition, determine that a second gain is a first gain; perform channel estimation based on the second part, to obtain a channel estimation result; and demodulate the payload based on the second gain and the channel estimation result, where the second gain is a gain used to demodulate the payload, and the first gain is a gain used to demodulate the frame header.

In a possible design, when the first received power does not meet the preset condition, the processor is further configured to adjust the first gain based on the additional channel estimation information, to obtain the second gain.

In a possible design, that the first received power meets a preset condition includes: $\left|10⋅log10\left(\frac{{P}_{1}}{{P}_{2}}\right)\right| \leq S .$

P₁ is the first received power, P₂ is second received power, the second received power is received power of the first preamble sequence, and S is a preset threshold.

According to anon-claimed third example to understand the present application, a communication apparatus is provided. The communication apparatus includes a memory and a processor. The memory is configured to store program instructions. The processor is configured to invoke the instructions stored in the memory. The apparatus is enabled to perform the method according to any one of the first example and the possible designs of the first example this application. Alternatively, as a third aspect, the apparatus is enabled to perform the method according to any one of the first aspect and the possible designs of the first aspect in the embodiments of this application.

According to a fourth aspect, an embodiment of this application provides a computer-readable storage medium including instructions. When the instructions are run on a computer, the computer is enabled to perform the method according to any one of the first example and the possible designs of the first example, or the method according to any one of the first aspect and the possible designs of the first aspect.

According to a fifth aspect, an embodiment of this application provides a chip system. The chip system includes a processor, and may further include a memory, configured to implement the method according to any one of the first example and the possible designs of the first example, or the method according to any one of the first aspect and the possible designs of the first aspect. The chip system may include a chip, or may include a chip and another discrete component.

According to an sixth aspect, an embodiment of this application provides a computer program product including instructions. When the instructions are run on a computer, the computer is enabled to perform the method according to any one of the first example and the possible designs of the first example, or the method according to any one of the first aspect and the possible designs of the first aspect.

In addition, for technical effects brought by any possible design manner in the second or third example or second to sixth aspect, refer to technical effects brought by different design manners in the method part. Details are not described herein again.

It should be noted that, in the foregoing examples and aspects, the first received power is received power of the additional channel estimation information, and the second received power is received power of the first preamble sequence. In a specific embodiment, the first received power is received power of the first preamble sequence, and the second received power is received power of the additional channel estimation information. Terms such as "first" and "second" in this application are used only for distinguishing.

### BRIEF DESCRIPTION OF DRAWINGS

FIG. 1 is a schematic diagram of a data frame;
FIG. 2a is a schematic diagram of a PSD according to an embodiment of this application;
FIG. 2b is a schematic diagram of another PSD according to an embodiment of this application;
FIG. 3a is a schematic diagram of a data frame according to an embodiment of this application;
FIG. 3b is a schematic diagram of another data frame according to an embodiment of this application;
FIG. 4 is a schematic diagram of a topology structure of PLC according to an embodiment of this application;
FIG. 5 is a schematic flowchart of a communication method according to an embodiment of this application;
FIG. 6 is a schematic diagram depicting that voltages change with time in a charging process of a mobile phone;
FIG. 7 is a schematic diagram of another data frame according to an embodiment of this application;
FIG. 8 is a schematic flowchart of another communication method according to an embodiment of this application;
FIG. 9 is a schematic diagram of a structure of a communication apparatus according to an embodiment of this application; and
FIG. 10 is a schematic diagram of a structure of another communication apparatus according to an embodiment of this application.

### DESCRIPTION OF EMBODIMENTS

It should be understood that, "/" indicates an "or" relationship unless otherwise specified in this application. For example, A/B may represent A or B. "And/or" in this application is merely an association relationship for describing associated objects, and represents that three relationships may exist. For example, A and/or B may represent the following three cases: Only A exists, both A and B exist, and only B exists. "At least one" refers to one or more, and "a plurality of" refers to two or more.

In addition, terms such as "first" and "second" in this application are used only for distinguishing. The terms cannot be understood as indicating or implying relative importance or implicitly indicating a quantity of indicated technical features. The terms also cannot be understood as indicating or implying a sequence.

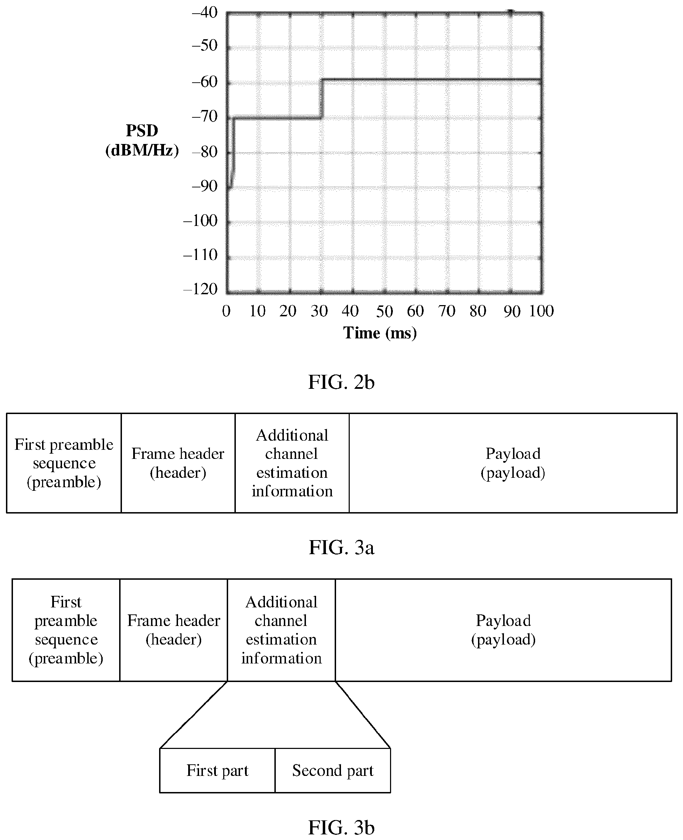

The following provides corresponding explanations of terms used in the embodiments of this application for ease of understanding.
1. PSD: The PSD is used to indicate power distribution in frequency domain. It should be noted that different PSDs in the embodiments of this application are PSDs for power within different frequency ranges. For example, a first PSD is different from a second PSD. In this case, power corresponding to the first PSD falls within a first frequency range, and power corresponding to the second PSD falls within a second frequency range. The first frequency range and the second frequency range are different frequency ranges. For example, the first PSD is shown in FIG. 2a, and the power corresponding to the first PSD falls within a frequency range of 0-30 MHz. The second PSD is shown in FIG. 2b, and the power corresponding to the second PSD falls within a frequency range of 30-100 MHz. For example, if an upper limit of the first frequency range is less than or equal to a lower limit of the second frequency range, the first PSD is a PSD for power at low frequencies, and the second PSD is a PSD for power at high frequencies. It should be noted that, in some other embodiments of this application, when the power corresponding to the PSD falls within the first frequency range, and the upper limit of the first frequency range is less than or equal to a first threshold, the first frequency range may be referred to as a low-frequency range. In this case, the PSD may be referred to as a PSD for power at low frequencies. For example, the first threshold may be 30 MHz. If the first threshold is 30 MHz, the PSD shown in FIG. 2a is a PSD for power at low frequencies. In some other embodiments, when the power corresponding to the PSD falls within the second frequency range, and the lower limit of the second frequency range is greater than or equal to a second threshold, the second frequency range may be referred to as a high-frequency range. In this case, the PSD may be referred to as a PSD for power at high frequencies. For example, the second threshold may be 30 MHz, 35 MHz, or the like. If the second threshold is 30 MHz, the PSD shown in FIG. 2b is a PSD for power at high frequencies. It may be understood that the first threshold and the second threshold may be the same or different. This is not limited. In addition, the first threshold and the second threshold may be predefined by a protocol.
2. Data frame: The data frame is a data unit used for communication in PLC, and includes a preamble sequence (preamble), a frame header, and a payload. The preamble sequence is used at least for synchronization. In addition, the preamble sequence may be further used for initial channel estimation, automatic gain control (AGC), and the like. The frame header includes some parameter information of a physical layer (physical, PHY), for example, an identifier of a transmit end device (which may also be referred to as a source node identifier (SID)), an ID of a receive end device (which may also be referred to as a destination node identifier (DID)), and the like. For example, the frame header may include at least one consecutive orthogonal frequency division multiplexing (OFDM) symbol. In some embodiments, the data frame may further include additional channel estimation information. Specifically, the additional channel estimation information is located between the frame header and the payload and is carried on at least one symbol. In other words, there are one or more symbols carrying the additional channel estimation information. This is not limited. For example, a data frame shown in FIG. 3a includes a first preamble sequence, a frame header, additional channel estimation information, and a payload. For example, the symbols carrying the additional channel estimation information are one or more additional channel estimation (ACE) symbols. The ACE symbols may be standard ACE symbols, or may be customized ACE symbols. For another example, the symbols carrying the additional channel estimation information are one or more first preamble sequences. For still another example, the symbols carrying the additional channel estimation information may alternatively be one or more customized symbols. A quantity of symbols carrying the additional channel estimation information and a type of the symbols are not limited in the embodiments of this application. In some embodiments, if a PSD used when the first preamble sequence and the frame header of the data frame shown in FIG. 3a are sent is different from a PSD used when the additional channel estimation information and the payload are sent, the additional channel estimation information may be used for automatic gain control and channel estimation. For example, the at least one symbol carrying the additional channel estimation information may be used as a whole for automatic gain control and channel estimation. For another example, the at least one symbol carrying the additional channel estimation information includes a first part and a second part. The first part is used for automatic gain control, and the second part is used for channel estimation. This helps demodulate the payload. For example, the first part is located before the second part. The data frame may be shown in FIG. 3b. For example, when the symbols carrying the additional channel estimation information are a second preamble sequence, the front half part of the second preamble sequence may be the first part of the symbols carrying the additional channel estimation information, and the rear half part of the second preamble sequence may be the second part of the symbols carrying the additional channel estimation information. The second preamble sequence may be a preamble sequence different from the first preamble sequence, or may be one or more first preamble sequences. This is not limited. For another example, when the at least one symbol carrying the additional channel estimation information is two standard ACE symbols, one of the ACE symbols is used for automatic gain control, and the other ACE symbol is used for channel estimation. The payload may be used to carry data that needs to be transmitted.

The following describes in detail a communication method in the embodiments of this application. A power line is used as a transmission medium to implement transmission or communication of a data frame in PLC. For example, the power line may be a copper power line, for example, a BV wire (polyvinyl chloride (PVC) insulated wire). The power line may include one or more bridging nodes. For example, the bridging nodes may be sockets, or may be power distribution boxes. This is not limited. One or more power-consuming devices may be connected to each bridging node. For example, the power-consuming devices in the embodiments of this application may be household appliances (for example, a refrigerator, a telephone, and an air conditioner), devices configured to implement power line communication (for ease of description in this application, "devices configured to implement power line communication" are referred to as "power line communication devices"), or the like. For example, the power line communication devices may be power line communication modems or the like. The power line communication devices may be configured to send a data frame through a power line, or receive a data frame through a power line. A power line communication device configured to send the data frame through the power line is a transmit end device in the PLC. A power line communication device configured to receive the data frame through the power line is a receive end device in the PLC.

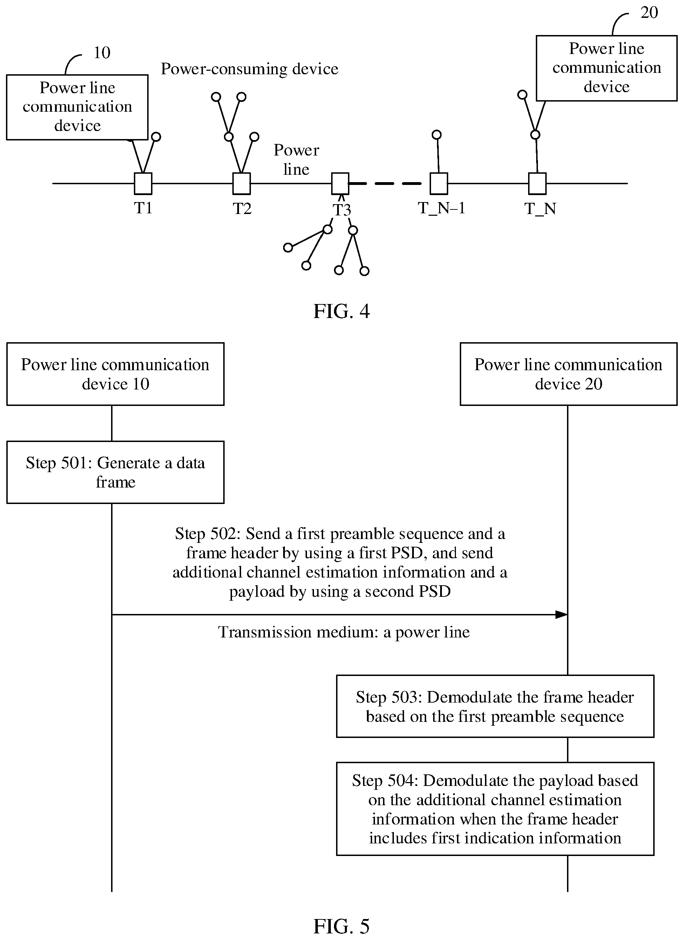

For example, FIG. 4 is a schematic diagram of a topology structure of PLC according to an embodiment of this application. A power line shown in FIG. 4 includes bridging nodes T1, T2, T3, ... T_N-1, and T_N. A power line communication device 10 is connected to the bridging node T1. A power line communication device 20 is connected to the bridging node T_N. If the power line communication device 10 sends a data frame to the power line communication device 20, the power line communication device 10 is a transmit end device in the PLC, and the power line communication device 20 is a receive end device in the PLC. It should be noted that FIG. 4 is merely an example of a topology structure of the PLC in this embodiment of this application. A quantity and/or a location of power line communication devices connected to the bridging nodes, a quantity and/or a location of bridging nodes through the power line, a quantity and/or a location of power-consuming devices, or the like is not limited in this embodiment of this application.

FIG. 4 is used as an example. When a power line communication 10 sends a data frame to a power line communication device 20, all parts of the data frame such as a preamble sequence, a frame header, additional channel estimation information, and a payload are sent by using a same PSD. Due to limitation by total transmitted power of the devices, power is prone to fall only within a specific frequency range when the power line communication device 10 sends the data frame to the power line communication device 20. This results in poor flexibility.

Therefore, this embodiment of this application provides the communication method, so that all the parts of the data frame may be sent by using different PSDs when the electronic device 10 sends the data frame to the power line communication device 20. This helps improve flexibility of sending the data frame. For example, the first preamble sequence and the frame header of the data frame shown in FIG. 3a are sent by using a first PSD, and the additional channel estimation information and the payload of the data frame are sent by using a second PSD. The first PSD is different from the second PSD.

The following describes in detail a communication method in an embodiment of this application with reference to an example in which the power line communication device 10 sends the data frame shown in FIG. 3a to the power line communication device 20 in the topology structure of the PLC shown in FIG. 4.

For example, FIG. 5 is a schematic flowchart of a communication method according to an embodiment of this application. The communication method specifically includes the following steps.

Step 501: The power line communication device 10 generates a data frame. The data frame includes a first preamble sequence, a frame header, additional channel estimation information, and a payload. For example, the data frame may be shown in FIG. 3a or FIG. 3b. It should be noted that, for related descriptions of the data frame, refer to related descriptions of the data frame in the foregoing related term descriptions. Details are not described herein again.

Step 502: The power line communication device 10 sends the first preamble sequence and the frame header of the data frame to the power line communication device 20 through a power line by using a first PSD, and sends the additional channel estimation information and the payload of the data frame to the power line communication device 20 through the power line by using a second PSD. The first PSD is different from the second PSD.

It should be noted that, that the first PSD is different from the second PSD may be understood as: A first frequency range includes a first frequency, but a second frequency range does not include the first frequency, where power corresponding to the first PSD falls within the first frequency range, and power corresponding to the second PSD falls within the second frequency range.

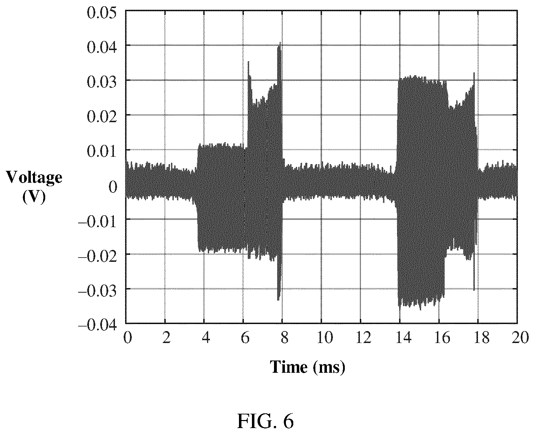

For example, the power line is a transmission medium for transmitting the data frame between the power line communication device 10 and the power line communication device 20 in the topology structure of the PLC shown in FIG. 4. However, one or more power-consuming devices (for example, different electrical appliances) may be connected to the power line through bridging nodes. A noise signal (for example, a voltage or a current) generated in a working process of the appliances affects PLC. An interference signal generated in the working process of the appliances usually affects a data frame transmitted in a low-frequency range. For example, FIG. 6 is a test diagram depicting that voltages generated when a mobile phone is charged with a 220 V alternating current at a frequency of 50 Hz change with time. It may be seen from FIG. 6 that voltage differences between 4 ms and 8 ms and voltage differences between 14 ms and 18 ms are larger between 0 ms and 20 ms. In this way, voltages generated in a charging process of the mobile phone from 4 ms to 8 ms and from 14 ms to 18 ms cause interference to the power line communication.

Generally, power of the interference falls within 30 MHz. In addition, a magnitude of attenuation generated when the data frame is transmitted through the power line in the PLC is related to a frequency range within which power corresponding to a PSD used when the data frame is sent falls. The magnitude of attenuation generated when the data frame is transmitted through the power line usually increases with a frequency. Therefore, in some embodiments, the first PSD is a PSD for power at low frequencies, and the second PSD is a PSD for power at high frequencies. In this way, when the total transmitted power of devices is given, long-distance transmission coverage can be achieved and impact of noise from an electrical appliance on payload transmission can be reduced. For example, the power corresponding to the first PSD falls within the first frequency range, the power corresponding to the second PSD falls within the second frequency range, and an upper limit of the first frequency range is less than or equal to a lower limit of the second frequency range. For another example, the upper limit of the first frequency range is less than or equal to a first threshold, and the lower limit of the second frequency range is greater than or equal to a second threshold. The first threshold and the second threshold may be the same or different. Specifically, the first threshold and the second threshold may be agreed upon in advance by a protocol, or may be determined according to a preset algorithm. This is not limited.

In addition, in this embodiment of this application, the first preamble sequence and the frame header are sent by using the first PSD, the additional channel estimation information and the payload are sent by using the second PSD, and the first PSD is different from the second PSD. In this case, in some embodiments, the frame header includes first indication information, and the first indication information is used to indicate that a type of the data frame is a first data-frame type. The PSD used when the first preamble sequence and the frame header of the data frame of the first data-frame type are sent is different from the PSD used when the additional channel estimation information and the payload of the data frame are sent. This helps instruct the receive end device to receive the data frame of the first data-frame type.

In some embodiments of this application, the frame header further includes second indication information, and the second indication information is used to indicate a quantity of symbols carrying the additional channel estimation information and a type of the symbols carrying the additional channel estimation information. This can help the receive end device identify the additional channel estimation information. For example, if the symbols carrying the additional channel estimation information are the first preamble sequence, the quantity of symbols carrying the additional channel estimation information indicated by the second indication information is a quantity of symbols included in the first preamble sequence, and the type of the symbols carrying the additional channel estimation information indicated by the second indication information is a preamble sequence. For another example, if the symbols carrying the additional channel estimation information are two standard ACE symbols, the quantity of symbols carrying the additional channel estimation information indicated by the second indication information is 2, and the type of the symbols carrying the additional channel estimation information indicated by the second indication information is a standard ACE symbol. It should be noted that the quantity of symbols carrying the additional channel estimation information and the type of the symbols are not limited in this embodiment of this application. For example, the symbols carrying the additional channel estimation information may alternatively be customized symbols or the like. In some other embodiments of this application, the quantity of symbols carrying the additional channel estimation information of the data frame of the first data-frame type and the type of the symbols may be alternatively agreed upon in advance by a protocol. In this case, the frame header may not include the second indication information. This helps the receive end device identify the additional channel estimation information, and reduce overheads for transmitting the data frame.

It should be noted that, when all parts of the data frame, such as the preamble sequence, the frame header, the additional channel estimation information, and the payload, are sent by using a same PSD, the frame header may not include information used to indicate the type of the data frame, or the frame header may include the information used to indicate the type of the data frame, for example, third indication information. The third indication information is used to indicate that the type of the data frame is a second data-frame type. Specifically, a preamble sequence, a frame header, a payload, and the like of the data frame of the second data-frame type are sent by using a same PSD. For example, the data frame of the second data-frame type may include additional channel estimation information, or may not include additional channel estimation information. This is not limited.

Step 503: The power line communication device 20 demodulates the frame header based on the first preamble sequence after receiving the first preamble sequence and the frame header of the data frame within the first frequency range. The power corresponding to the first PSD falls within the first frequency range.

For example, the power line communication device 20 may demodulate the frame header based on the first preamble sequence in the following manner:
The power line communication device 20 determines first received power based on the first preamble sequence. The first received power is received power of the first preamble sequence. For example, the first received power includes received power of a preamble sequence at at least one sampling moment. Then, the power line communication device 20 determines a first gain based on the first received power. The power line communication device 20 performs initial channel estimation based on the first preamble sequence, to obtain a first channel estimation result. Then, the power line communication device 20 demodulates the frame header based on the first gain and the first channel estimation result.

It should be noted that, for a manner of determining the first gain based on the first received power in this embodiment of this application, refer to a manner of determining a gain based on received power of a preamble sequence in a conventional technology, or refer to another manner. This is not limited. For a manner of performing the initial channel estimation based on the first preamble sequence in this embodiment of this application, refer to an existing manner of performing the initial channel estimation, or refer to another manner. This is not limited. For a manner of demodulating the frame header based on the first gain and the first channel estimation result in this embodiment of this application, refer to an existing manner of demodulating the frame header, or refer to another manner. This is not limited.

It should be further noted that the power line communication device 20 may further demodulate the frame header based on the first preamble sequence in another manner in this embodiment of this application. This is not limited.

Step 504: The power line communication device 20 demodulates the payload of the data frame based on the additional channel estimation information of the data frame when the frame header includes the first indication information. The additional channel estimation information and the payload are received within the second frequency range. The power corresponding to the second PSD falls within the second frequency range.

When the frame header includes the first indication information, the power line communication device 20 determines that the type of the data frame is the first data-frame type. Therefore, the power line communication device 20 demodulates the payload based on the additional channel estimation information of the data frame. This helps increase a probability of successfully demodulating the payload.

In some embodiments, the power line communication device 20 may demodulate the payload based on the additional channel estimation information in the following manner when the frame header includes the first indication information:
The power line communication device 20 determines second received power and a second channel estimation result based on the additional channel estimation information. The second received power is received power of the additional channel estimation information. Then, the power line communication device 20 determines whether the second received power meets a preset condition. When the second received power meets the preset condition, the power line communication device 20 demodulates the payload based on the first gain and the second channel estimation result. The first gain is used to demodulate the frame header, and is determined based on the first preamble sequence. In some embodiments, when the second received power does not meet the preset condition, the power line communication device 20 determines a second gain based on the additional channel estimation information. Then, the power line communication device 20 demodulates the payload based on the second gain and the second channel estimation result.

For example, the preset condition may include one or more of an algorithm, a rule, a parameter, or the like. For example, the preset condition includes an expression (1) and a preset threshold. The expression (1) is: $\left|10⋅log10\left(\frac{{P}_{2}}{{P}_{1}}\right)\right| \leq S$ (1)

P₁ is the first received power, P₂ is the second received power, and S is the preset threshold.

The preset threshold may be predefined by a protocol, may be determined according to a preset algorithm, or the like. A manner of determining the preset threshold is not limited in this embodiment of this application.

For another example, the preset condition includes that a difference between the second received power and the first received power is within a preset range. The preset range may be predefined by a protocol, may be determined according to a preset algorithm, or the like. A manner of determining a third threshold is not limited in this embodiment of this application.

The foregoing description is merely an example of the preset condition, and does not constitute a limitation on this embodiment of this application.

It should be noted that, for a manner of determining the second gain based on the additional channel estimation information in this embodiment of this application, refer to a manner of determining the first gain based on the first preamble sequence. Details are not described herein again.

The data frame shown in FIG. 3b is used as an example. The additional channel estimation information includes a first part and a second part. The first part is used for automatic gain control, and the second part is used for channel estimation. In this case, if the preset condition includes the expression (1) and the preset threshold, the power line communication device 20 may demodulate the payload based on the additional channel estimation information in the following manner when the frame header includes the first indication information:
The power line communication device 20 determines the second received power based on the first part of the additional channel estimation information, and determines the second channel estimation result based on the second part of the additional channel estimation information. The second received power is received power of the first part of the additional channel estimation information. Then, the power line communication device 20 determines, based on the second received power, whether the expression (1) is satisfied. When the expression (1) is satisfied, the power line communication device 20 demodulates the payload based on the first gain and the second channel estimation result. The first gain is determined based on the first preamble sequence. In some embodiments, when the expression (1) is not satisfied, the power line communication device 20 determines the second gain based on the first part of the additional channel estimation information. Then, the power line communication device 20 demodulates the payload based on the second gain and the second channel estimation result.

It should be noted that, for a manner of determining the second gain based on the first part of the additional channel estimation information in this embodiment of this application, refer to a manner of determining the second gain based on the additional channel estimation information in the foregoing embodiment of this application. Details are not described herein again.

In some other embodiments of this application, the frame header does not include the first indication information, or the frame header includes third indication information. For example, the third indication information is used to indicate that the type of the data frame is a second data-frame type, and all parts of the data frame of the second data-frame type are sent by using a same PSD. In this case, the power line communication device 20 demodulates the payload based on the first preamble sequence.

In addition, in this embodiment of this application, the power line communication device may determine the additional channel estimation information based on the quantity of symbols included in the additional channel estimation information and the type of the symbols. The quantity of symbols included in the additional channel estimation information and the type of the symbols may be indicated by the indication information carried in the frame header, or may be predefined by a protocol.

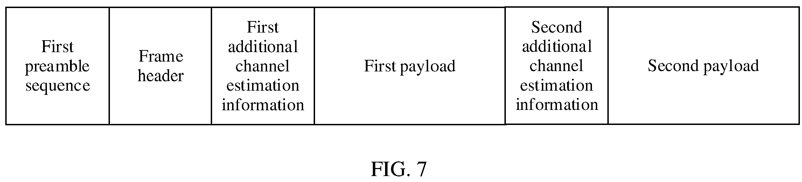

The foregoing describes the communication method by using an example in which two different PSDs are used for the data frame shown in FIG. 3a. In this embodiment of this application, one data frame may alternatively be sent by using three or more PSDs. For a communication method of the data frame, refer to the communication method in FIG. 5. For example, a data frame includes a first preamble sequence, a frame header, first additional channel estimation information, a first payload, second additional channel estimation information, and a second payload as shown in FIG. 7. The first preamble sequence and the frame header are sent by using a first PSD. The first additional channel estimation information and the first payload are sent by using a second PSD. The second additional channel estimation information and the second payload are sent by using a third PSD. In specific implementation, the frame header may include data-frame type indication information, to enable a receive end device to perform corresponding demodulation. For the first additional channel estimation information and the second additional channel estimation information, refer to related descriptions of the additional channel estimation information in the foregoing embodiments. For a manner of demodulating the frame header, the first payload, and the second payload, refer to a related manner of demodulating the frame header and the payload in the communication method shown in FIG. 5. Details are not described herein again.

It should be noted that, in this embodiment of this application, a frame format or a frame structure of a data frame whose parts can be sent by using different PSDs in FIG. 3a, FIG. 3b, or FIG. 7 may be further used as a separate embodiment. This is not limited by the communication method in this embodiment of this application. For example, a frame structure or a frame format of the data frame of the first data-frame type is shown in FIG. 3a. When the data frame shown in FIG. 3a is sent, the PSD used when the first preamble sequence and the frame header are sent is different from the PSD used when the additional channel estimation information and the payload are sent. For another example, when the data frame shown in FIG. 7 is sent, the first preamble sequence and the frame header are sent by using a first PSD, the first additional channel estimation information and the first payload are sent by using a second PSD, and the second additional channel estimation information and the second payload are sent by using a third PSD. The first PSD, the second PSD, and the third PSD are different from each other.

In addition, in some embodiments, the data frame does not include additional channel estimation information. For example, a data frame shown in FIG. 1 includes a preamble sequence, a frame header, and a payload. In this case, all parts of the data frame shown in FIG. 1 may be sent by using different PSDs in this embodiment of this application. This helps improve flexibility of sending the data frame. For example, the preamble sequence and the frame header of the data frame shown in FIG. 1 are sent by using a first PSD, and the payload is sent by using a second PSD. The first PSD is different from the second PSD.

The following describes in detail a communication method in an embodiment of this application with reference to an example in which the power line communication device 10 sends the data frame shown in FIG. 1 to the power line communication device 20 in the topology structure of the PLC shown in FIG. 4.

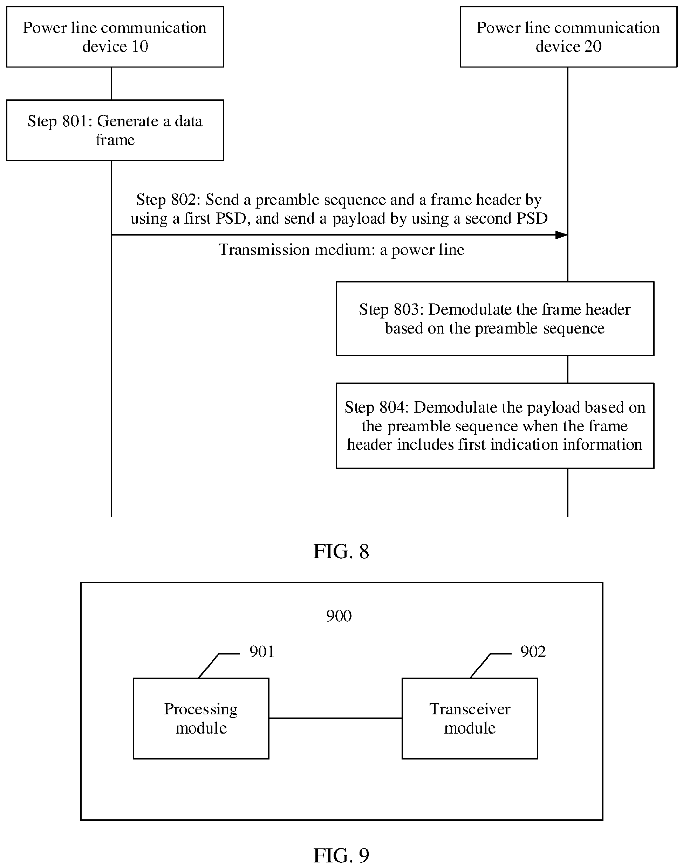

For example, FIG. 8 is a schematic flowchart of another communication method according to an embodiment of this application. The another communication method specifically includes the following steps.

Step 801: The power line communication device 10 generates a data frame. For example, the data frame includes a preamble sequence, a frame header, and a payload as shown in FIG. 1.

For related descriptions of the preamble sequence, the frame header, and the payload, refer to related descriptions of the data frame in the foregoing related term descriptions. Details are not described herein again.

Step 802: The power line communication device 10 sends the preamble sequence and the frame header of the data frame to the power line communication device 20 through a power line by using a first PSD, and sends the payload of the data frame to the power line communication device 20 through the power line by using a second PSD. The first PSD is different from the second PSD.

It should be noted that, that the first PSD is different from the second PSD may be understood as: A first frequency range includes a first frequency, but a second frequency range does not include the first frequency, where power corresponding to the first PSD falls within the first frequency range, and power corresponding to the second PSD falls within the second frequency range.

Therefore, in some embodiments, the first PSD is a PSD for power at low frequencies, and the second PSD is a PSD for power at high frequencies. Specifically, for related descriptions of the PSD for the power at the low frequencies and the PSD for the power at the high frequencies, refer to related descriptions in the communication method shown in FIG. 5. Details are not described herein again.

In addition, in this embodiment of this application, the preamble sequence and the frame header are sent by using the first PSD, the payload is sent by using the second PSD, and the first PSD is different from the second PSD. In this case, in some embodiments, the frame header includes first indication information, and the first indication information is used to indicate that a type of the data frame is a first data-frame type. The PSD used when the preamble sequence and the frame header of the data frame of the first data-frame type are sent is different from the PSD used when the additional channel estimation information and the payload of the data frame are sent. This helps instruct the receive end device to receive the data frame of the first data-frame type.

Step 803: The power line communication device 20 demodulates the frame header based on the preamble sequence after receiving the preamble sequence and the frame header of the data frame within the first frequency range. The power corresponding to the first PSD falls within the first frequency range.

It should be noted that, in this embodiment of this application, for a specific implementation of demodulating the frame header based on the preamble sequence, refer to a manner of demodulating the frame header based on the first preamble sequence in the communication method shown in FIG. 5. Details are not described herein again.

Step 804: The power line communication device 20 may demodulate the payload of the data frame based on the preamble sequence when the frame header includes the first indication information. The payload is received within the second frequency range. The power corresponding to the second PSD falls within the second frequency range.

In some embodiments, for a manner in which the power line communication device 20 demodulates the payload of the data frame based on the preamble sequence, refer to an existing manner of demodulating the payload based on the preamble sequence. For example, the power line communication device 20 demodulates the payload based on a first gain and a first channel estimation result. The first gain is determined based on the preamble sequence. The first channel estimation result is obtained from initial channel estimation based on the preamble sequence. This helps simplify an implementation. When the PSD used when the preamble sequence and the frame header of the data frame are sent is different from the PSD used when the payload of the data frame is sent, a manner of demodulating the payload may be applied to a scenario in which there is a small quantity of bits of data carried in the payload. For example, the payload carries 1-bit data or 2-bit data.

In some other embodiments, the power line communication device 20 may further demodulate the payload of the data frame based on the preamble sequence in the following manner:
When the frame header includes the first indication information, the power line communication device 20 may determine received power of the payload based on the payload of the data frame received within the second frequency range. Then, the power line communication device 20 determines whether the received power of the payload meets a preset condition. When the received power of the payload meets a preset condition, the power line communication device 20 demodulates the payload based on the first gain and the first channel estimation result. The first gain is determined based on the preamble sequence. The first channel estimation result is obtained from initial channel estimation based on the preamble sequence. In some embodiments, when the received power of the payload does not meet the preset condition, the power line communication device 20 determines a second gain based on the payload received within the second frequency range. Then, the power line communication device 20 demodulates the payload based on the second gain and a second channel estimation result. The second channel estimation result is obtained based on the payload received within the second frequency range. For a manner of determining the second gain based on the payload received within the second frequency range, refer to the manner of determining the second gain based on the additional channel estimation information in the foregoing embodiment of this application. Details are not described herein again. It should be noted that, for a specific implementation of determining whether the received power of the payload meets the preset condition in this embodiment of this application, refer to the specific implementation of determining whether the second received power meets the preset condition in the method shown in FIG. 5. Details are not described herein again.

The foregoing embodiments may be used separately, or may be used in combination to achieve different technical effects.

In the foregoing embodiments provided in this application, the communication method provided in the embodiments of this application is described from a perspective of a power line communication device serving as an execution body. To implement functions in the communication method provided in the embodiments of this application, a terminal device may include a hardware structure and/or a software module, and implement the functions in a form of the hardware structure, the software module, or a combination of the hardware structure and the software module. Whether a specific function in the foregoing functions is performed by the hardware structure, the software module, or the combination of the hardware structure and the software module depends on particular applications and design constraints of the technical solutions.

Same as the foregoing concept, as shown in FIG. 9, an embodiment of this application further provides a communication apparatus 900. The communication apparatus 900 includes a transceiver module 902 and a processing module 901.

In an example, the communication apparatus 900 is configured to implement functions of the power line communication device 10 and/or the power line communication device 20 in the foregoing methods. The communication apparatus 900 may be a power line communication device, or may be an apparatus in a power line communication device. The communication apparatus may be a chip system. In this embodiment of this application, the chip system may include a chip, or may include a chip and another discrete component.

In some embodiments, when the communication apparatus 900 is configured to implement functions of the power line communication device 10 serving as a transmit end device in the foregoing methods, the processing module 901 is configured to generate a data frame. The data frame includes a first preamble sequence, a frame header, additional channel estimation information, and a payload. The first preamble sequence is used at least for synchronization. The frame header includes first indication information, and the first indication information is used to indicate that a type of the data frame is a first data-frame type. The additional channel estimation information is located between the frame header and the payload and is carried on at least one symbol. The transceiver module 902 is configured to: send the first preamble sequence and the frame header through a power line by using a first PSD; and send the additional channel estimation information and the payload through the power line by using a second PSD. The first PSD is different from the second PSD.

In some other embodiments, when the communication apparatus 900 is configured to implement functions of the power line communication device 20 serving as a receive end device in the foregoing methods, the processing module 901 is configured to: demodulate a frame header based on a first preamble sequence after the transceiver module 902 receives the first preamble sequence and the frame header of a data frame within a first frequency range, and demodulate a payload of the data frame based on the additional channel estimation information when the frame header includes first indication information. The additional channel estimation information and the payload are received by the transceiver module 902 within a second frequency range. Power corresponding to a first power spectral density (PSD) falls within the first frequency range. Power corresponding to a second PSD falls within the second frequency range. The first PSD is different from the second PSD. The additional channel estimation information is located between the frame header and the payload and is carried on at least one symbol. The first indication information is used to indicate that a type of the data frame is a first data-frame type.

For specific execution processes of the processing module 901 and the transceiver module 902, refer to the descriptions in the foregoing method embodiments. Division into the modules in the embodiments of this application is an example, and is merely logical function division. In actual implementation, another division manner may be used. In addition, functional modules in the embodiments of this application may be integrated into one processor, or each of the modules may exist alone physically, or two or more modules may be integrated into one module. The integrated module may be implemented in a form of hardware, or may be implemented in a form of a software functional module.

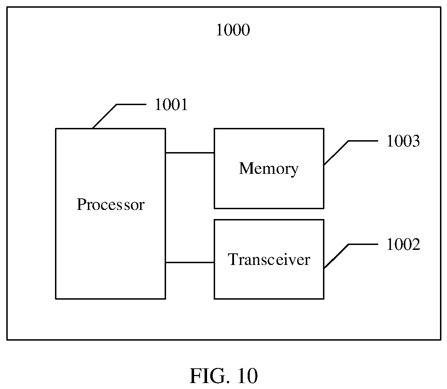

Same as the foregoing concept, as shown in FIG. 10, an embodiment of this application further provides a communication apparatus 1000.

In an example, the communication apparatus 1000 is configured to implement functions of the power line communication device 10 and/or the power line communication device 20 in the foregoing methods. The communication apparatus 1000 may be a power line communication device, or may be an apparatus in a power line communication device. The communication apparatus 1000 includes at least one processor 1001, configured to implement functions of the power line communication device 10 and/or the power line communication device 20 in the foregoing methods. For example, the processor 1001 may be configured to generate a data frame, or demodulate a frame header and a payload. For details, refer to detailed descriptions in the method. Details are not described herein again.

In some embodiments, the communication apparatus 1000 may further include a transceiver 1002, configured to communicate with another device through a power line. In this way, the communication apparatus 1000 may communicate with the another device. For example, the transceiver 1002 may be a communication interface, a circuit, a bus, a module, or a communication interface of another type. The processor 1001 sends or receives a data frame by using the transceiver 1002, and is configured to implement the communication methods in the foregoing embodiments. For example, the transceiver 1002 may be configured to: send a first preamble sequence and a frame header through a power line by using a first PSD, and send additional channel estimation information and a payload through the power line by using a second PSD.

In some embodiments, the communication apparatus 1000 may further include at least one memory 1003, configured to store program instructions and/or data. The memory 1003 is coupled to the processor 1001. Coupling in this embodiment of this application may be indirect coupling or a communication connection between apparatuses, units, or modules in an electrical form, a mechanical form, or another form, and is used for information exchange between the apparatuses, the units, or the modules. In another implementation, the memory 1003 may alternatively be located outside the apparatus 1000. The processor 1001 may operate in collaboration with the memory 1003. The processor 1001 may execute the program instructions stored in the memory 1003. At least one of the at least one memory may be included in the processor.

A connection medium between the transceiver 1002, the processor 1001, and the memory 1003 is not limited in this embodiment of this application. For example, the memory 1003, the processor 1001, and the transceiver 1002 may be connected through buses in FIG. 10 in this embodiment of this application. The buses may be classified into an address bus, a data bus, a control bus, and the like.

In the embodiments of this application, the processor may be a general-purpose processor, a digital signal processor, an application-specific integrated circuit, a field programmable gate array or another programmable logic device, a discrete gate or transistor logic device, or a discrete hardware component. The processor may implement or perform the methods, steps, and logical block diagrams disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware and a software module in the processor.

In the embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction structure or a data structure and that can be accessed by a computer, but is not limited thereto. The memory in the embodiments of this application may alternatively be a circuit or any other apparatus that can implement a storage function, and is configured to store program instructions and/or data.

All or some of the methods in the embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of the present invention are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

## Claims

1. A communication method, wherein the method comprises:
receiving, by a receive end device (20), a first preamble sequence and a frame header of a data frame within a first frequency range, wherein power corresponding to a first power spectral density, PSD, falls within the first frequency range;
demodulating (503), by the receive end device (20), the frame header based on the first preamble sequence; and
demodulating (504), by the receive end device (20), a payload of the data frame based on additional channel estimation information of the data frame when the frame header comprises first indication information, wherein the additional channel estimation information and the payload are received within a second frequency range, power corresponding to a second PSD falls within the second frequency range, the first PSD is different from the second PSD, the additional channel estimation information is located between the frame header and the payload and is carried on at least one symbol, and the first indication information is used to indicate that a type of the data frame is a first data-frame type;
wherein the at least one symbol comprises a first part and a second part; the first part is used for automatic gain control, AGC, and the second part is used for channel estimation; and
the demodulating (504), by the receive end device (20), a payload of the data frame based on additional channel estimation information of the data frame when the frame header comprises first indication information comprises:
determining, by the receive end device (20), first received power based on the first part when the frame header comprises the first indication information, wherein the first received power is received power of the first part;
determining, by the receive end device (20) when the first received power meets a preset condition, that a second gain is a first gain, wherein the second gain is a gain used to demodulate the payload, and the first gain is a gain used to demodulate the frame header; wherein that the first received power meets a preset condition comprises: $\left|10⋅log10\left(\frac{{P}_{1}}{{P}_{2}}\right)\right| \leq S ,$ wherein
P₁ is the first received power, P₂ is second received power, the second received power is received power of the first preamble sequence, and S is a preset threshold;
performing, by the receive end device (20), channel estimation based on the second part, to obtain a channel estimation result; and
demodulating, by the receive end device (20), the payload based on the second gain and the channel estimation result;
wherein when the first received power does not meet the preset condition, adjusting the first gain based on the additional channel estimation information, to obtain the second gain.

2. The method according to claim 1, wherein the frame header further comprises second indication information, and the second indication information is used to indicate a quantity of symbols carrying the additional channel estimation information and a type of the symbols carrying the additional channel estimation information.

3. The method according to claim 1 or 2, wherein an upper limit of the first frequency range is less than or equal to a lower limit of the second frequency range.

4. The method according to any one of claims 1 to 3, wherein the at least one symbol is a second preamble sequence, and the second preamble sequence comprises at least one first preamble sequence; or the at least one symbol is at least two additional channel estimation, ACE, symbols.

5. A communication apparatus (1000), wherein the apparatus comprises a processor (1001) and a transceiver;
the processor (1001) is configured to: demodulate a frame header based on a first preamble sequence after the transceiver (1002) receives the first preamble sequence and the frame header of a data frame within a first frequency range, and demodulate a payload of the data frame based on additional channel estimation information of the data frame when the frame header comprises first indication information; and
the additional channel estimation information and the payload are received by the transceiver (1002) within a second frequency range, power corresponding to a first power spectral density, PSD, falls within the first frequency range, power corresponding to a second PSD falls within the second frequency range, the first PSD is different from the second PSD, the additional channel estimation information is located between the frame header and the payload and is carried on at least one symbol, and the first indication information is used to indicate that a type of the data frame is a first data-frame type;
wherein the at least one symbol comprises a first part and a second part; the first part is used for automatic gain control, AGC, and the second part is used for channel estimation; and
that the processor (1001) is configured to demodulate a payload of the data frame based on additional channel estimation information of the data frame when the frame header comprises first indication information specifically comprises:
the processor (1001) is configured to: determine first received power based on the first part when the frame header comprises the first indication information, wherein the first received power is received power of the first part; when the first received power meets a preset condition, determine that a second gain is a first gain; wherein the first received power meets a preset condition comprises: $\left|10⋅log10\left(\frac{{P}_{1}}{{P}_{2}}\right)\right| \leq S ,$ wherein
P₁ is the first received power, P₂ is second received power, the second received power is received power of the first preamble sequence, and S is a preset threshold; perform channel estimation based on the second part, to obtain a channel estimation result; and demodulate the payload based on the second gain and the channel estimation result, wherein the second gain is a gain used to demodulate the payload, and the first gain is a gain used to demodulate the frame header; wherein when the first received power does not meet the preset condition, adjust the first gain based on the additional channel estimation information, to obtain the second gain.

6. The communication apparatus (1000) according to claim 5, wherein the frame header further comprises second indication information, and the second indication information is used to indicate a quantity of symbols carrying the additional channel estimation information and a type of the symbols carrying the additional channel estimation information.

7. The communication apparatus (1000) according to claim 5 or 6, wherein an upper limit of the first frequency range is less than or equal to a lower limit of the second frequency range.

8. Computer-readable storage medium including instructions, wherein when the instructions are run on a computer, the computer is configured to perform the method according to any one of claims 1 to 4.

9. Computer program product including instructions, wherein when the instructions are run on a computer, the computer is configured to perform the method according to any one of claims 1 to 4.

## Patentansprüche

1. Kommunikationsverfahren, wobei das Verfahren Folgendes umfasst:
Empfangen, durch eine empfangsseitige Vorrichtung (20), einer ersten Präambelsequenz und eines Frame-Headers eines Datenframes innerhalb eines ersten Frequenzbereichs, wobei Leistung, die einer ersten spektralen Leistungsdichte bzw. PSD entspricht, innerhalb des ersten Frequenzbereichs liegt;
Demodulieren (503), durch die empfangsseitige Vorrichtung (20), des Frame-Headers basierend auf der ersten Präambelsequenz; und
Demodulieren (504), durch die empfangsseitige Vorrichtung (20), von Nutzdaten des Datenframes basierend auf zusätzlichen Kanalschätzungsinformationen des Datenframes, wenn der Frame-Header erste Angabeinformationen umfasst, wobei die zusätzlichen Kanalschätzungsinformationen und die Nutzdaten innerhalb eines zweiten Frequenzbereichs empfangen werden, Leistung, die einer zweiten PSD entspricht, innerhalb des zweiten Frequenzbereichs liegt, die erste PSD von der zweiten PSD verschieden ist, sich die zusätzlichen Kanalschätzungsinformationen zwischen dem Frame-Header und den Nutzdaten befinden und in mindestens einem Symbol transportiert werden und die ersten Angabeinformationen werden verwendet, um anzugeben, dass ein Typ des Datenframes ein erster Datenframetyp ist;
wobei das mindestens eine Symbol einen ersten Teil und einen zweiten Teil umfasst; der erste Teil zur automatischen Verstärkungssteuerung, AGC, verwendet wird und der zweite Teil zur Kanalschätzung verwendet wird; und
das Demodulieren (504), durch die empfangsseitige Vorrichtung (20), von Nutzdaten des Datenframes basierend auf zusätzlichen Kanalschätzungsinformationen des Datenframes, wenn der Frame-Header erste Angabeinformationen umfasst, Folgendes umfasst:
Bestimmen, durch die empfangsseitige Vorrichtung (20), einer ersten Empfangsleistung basierend auf dem ersten Teil, wenn der Frame-Header die ersten Angabeinformationen umfasst, wobei die erste Empfangsleistung eine Empfangsleistung des ersten Teils ist;
Bestimmen, durch die empfangsseitige Vorrichtung (20), wenn die erste Empfangsleistung eine voreingestellte Bedingung erfüllt, dass eine zweite Verstärkung eine erste Verstärkung ist, wobei die zweite Verstärkung eine Verstärkung ist, die zum Demodulieren der Nutzdaten verwendet wird, und die erste Verstärkung eine Verstärkung ist, die zum Demodulieren des Frame-Headers verwendet wird; wobei dass die erste Empfangsleistung eine voreingestellte Bedingung erfüllt, Folgendes umfasst: $\left|10⋅log10\left(\frac{{P}_{1}}{{P}_{2}}\right)\right| \leq S$, wobei
P₁ die erste Empfangsleistung ist, P₂ die zweite Empfangsleistung ist, die zweite Empfangsleistung eine Empfangsleistung der ersten Präambelsequenz ist und S eine voreingestellte Schwelle ist;
Durchführen, durch die empfangsseitige Vorrichtung (20), einer Kanalschätzung basierend auf dem zweiten Teil, um ein Kanalschätzungsergebnis zu erhalten; und
Demodulieren, durch die empfangsseitige Vorrichtung (20), der Nutzdaten basierend auf der zweiten Verstärkung und dem Kanalschätzungsergebnis;
wobei, wenn die erste Empfangsleistung die voreingestellte Bedingung nicht erfüllt, Anpassen der ersten Verstärkung basierend auf den zusätzlichen Kanalschätzungsinformationen, um die zweite Verstärkung zu erhalten.

2. Verfahren nach Anspruch 1, wobei der Frame-Header ferner zweite Angabeinformationen umfasst und die zweiten Angabeinformationen verwendet werden, um eine Anzahl von Symbolen, die die zusätzlichen Kanalschätzungsinformationen transportieren, und einen Typ der Symbole, die die zusätzlichen Kanalschätzungsinformationen transportieren, anzugeben.

3. Verfahren nach Anspruch 1 oder 2, wobei eine obere Grenze des ersten Frequenzbereichs kleiner oder gleich einer unteren Grenze des zweiten Frequenzbereichs ist.

4. Verfahren nach einem der Ansprüche 1 bis 3, wobei das mindestens eine Symbol eine zweite Präambelsequenz ist und die zweite Präambelsequenz mindestens eine erste Präambelsequenz umfasst; oder es sich bei dem mindestens einen Symbol um mindestens zwei zusätzliche Kanalschätzungs- bzw. ACE-Symbole handelt.

5. Kommunikationseinrichtung (1000), wobei die Einrichtung einen Prozessor (1001) und einen Sendeempfänger umfasst;
der Prozessor (1001) zu Folgendem ausgelegt ist: Demodulieren eines Frame-Headers basierend auf einer ersten Präambelsequenz, nachdem der Sendeempfänger (1002) die erste Präambelsequenz und den Frame-Header eines Datenframes innerhalb eines ersten Frequenzbereichs empfängt, und Demodulieren von Nutzdaten des Datenframes basierend auf zusätzlichen Kanalschätzungsinformationen des Datenframes, wenn der Frame-Header erste Angabeinformationen umfasst; und
die zusätzlichen Kanalschätzungsinformationen und die Nutzdaten durch den Sendeempfänger (1002) innerhalb eines zweiten Frequenzbereichs empfangen werden, Leistung, die einer ersten spektralen Leistungsdichte bzw. PSD entspricht, innerhalb des ersten Frequenzbereichs liegt, Leistung, die einer zweiten PSD entspricht, innerhalb des zweiten Frequenzbereichs liegt, die erste PSD von der zweiten PSD verschieden ist, sich die zusätzlichen Kanalschätzungsinformationen zwischen dem Frame-Header und den Nutzdaten befinden und in mindestens einem Symbol transportiert werden und die ersten Angabeinformationen verwendet werden, um anzugeben, dass ein Typ des Datenframes ein erster Datenframetyp ist;
wobei das mindestens eine Symbol einen ersten Teil und einen zweiten Teil umfasst; der erste Teil zur automatischen Verstärkungssteuerung, AGC, verwendet wird und der zweite Teil zur Kanalschätzung verwendet wird; und
dass der Prozessor (1001) dazu ausgelegt ist, Nutzdaten des Datenframes basierend auf zusätzlichen Kanalschätzungsinformationen des Datenframes zu demodulieren, wenn der Frame-Header erste Angabeinformationen umfasst, insbesondere Folgendes umfasst:
der Prozessor (1001) ist zu Folgendem ausgelegt: Bestimmen einer ersten Empfangsleistung basierend auf dem ersten Teil, wenn der Frame-Header die ersten Angabeinformationen umfasst, wobei die erste Empfangsleistung eine Empfangsleistung des ersten Teils ist; wenn die erste Empfangsleistung eine voreingestellte Bedingung erfüllt, Bestimmen, dass eine zweite Verstärkung eine erste Verstärkung ist; wobei dass die erste Empfangsleistung eine voreingestellte Bedingung erfüllt, Folgendes umfasst: $\left|10⋅log10\left(\frac{{P}_{1}}{{P}_{2}}\right)\right| \leq S$, wobei
P₁ die erste Empfangsleistung ist, P₂ die zweite Empfangsleistung ist, die zweite Empfangsleistung eine Empfangsleistung der ersten Präambelsequenz ist und S eine voreingestellte Schwelle ist; Durchführen einer Kanalschätzung basierend auf dem zweiten Teil, um ein Kanalschätzungsergebnis zu erhalten; und Demodulieren der Nutzdaten basierend auf der zweiten Verstärkung und dem Kanalschätzungsergebnis, wobei die zweite Verstärkung eine Verstärkung ist, die zum Demodulieren der Nutzdaten verwendet wird, und die erste Verstärkung eine Verstärkung ist, die zum Demodulieren des Frame-Headers verwendet wird; wobei, wenn die erste Empfangsleistung die voreingestellte Bedingung nicht erfüllt, Anpassen der ersten Verstärkung basierend auf den zusätzlichen Kanalschätzungsinformationen, um die zweite Verstärkung zu erhalten.

6. Kommunikationseinrichtung (1000) nach Anspruch 5, wobei der Frame-Header ferner zweite Angabeinformationen umfasst und die zweiten Angabeinformationen verwendet werden, um eine Anzahl von Symbolen, die die zusätzlichen Kanalschätzungsinformationen transportieren, und einen Typ der Symbole, die die zusätzlichen Kanalschätzungsinformationen transportieren, anzugeben.

7. Kommunikationseinrichtung (1000) nach Anspruch 5 oder 6, wobei eine obere Grenze des ersten Frequenzbereichs kleiner oder gleich einer unteren Grenze des zweiten Frequenzbereichs ist.

8. Computerlesbares Speichermedium, das Anweisungen beinhaltet, wobei, wenn die Anweisungen auf einem Computer ausgeführt werden, der Computer dazu konfiguriert wird, das Verfahren nach einem der Ansprüche 1 bis 4 durchzuführen.

9. Computerprogrammprodukt, das Anweisungen beinhaltet, wobei, wenn die Anweisungen auf einem Computer ausgeführt werden, der Computer dazu konfiguriert wird, das Verfahren nach einem der Ansprüche 1 bis 4 durchzuführen.

## Revendications

1. Procédé de communication, dans lequel le procédé comprend :
la réception, par un dispositif terminal de réception (20), d'une première séquence de préambule et d'un en-tête de trame d'une trame de données dans une première plage de fréquence, une puissance correspondant à une première densité spectrale de puissance, PSD, étant comprise dans la première plage de fréquence ;
la démodulation (503), par le dispositif terminal de réception (20), de l'en-tête de trame sur la base de la première séquence de préambule ; et
la démodulation (504), par le dispositif terminal de réception (20), d'une charge utile de la trame de données sur la base d'informations d'estimation de canal supplémentaires de la trame de données lorsque l'en-tête de trame comprend des premières informations d'indication, les informations d'estimation de canal supplémentaires et la charge utile étant reçues dans une deuxième plage de fréquences, la puissance correspondant à une deuxième PSD étant comprise dans la deuxième plage de fréquences, la première PSD étant différente de la deuxième PSD, les informations d'estimation de canal supplémentaires étant situées entre l'en-tête de trame et la charge utile et étant transportées sur au moins un symbole, et les premières informations d'indication étant utilisées pour indiquer qu'un type de la trame de données est un premier type de trame de données ;
dans lequel l'au moins un symbole comprend une première partie et une deuxième partie ; la première partie est utilisée pour la commande automatique de gain, AGC, et la deuxième partie est utilisée pour l'estimation de canal ; et
la démodulation (504), par le dispositif terminal de réception (20), d'une charge utile de la trame de données sur la base d'informations d'estimation de canal supplémentaires de la trame de données lorsque l'en-tête de trame comprend des premières informations d'indication comprend :
la détermination, par le dispositif terminal de réception (20), d'une première puissance reçue sur la base de la première partie lorsque l'en-tête de trame comprend les premières informations d'indication, la première puissance reçue étant la puissance reçue de la première partie ;
la détermination, par le dispositif terminal de réception (20) lorsque la première puissance reçue remplit une condition prédéfinie, qu'un deuxième gain est un premier gain, le deuxième gain étant un gain utilisé pour démoduler la charge utile, et le premier gain étant un gain utilisé pour démoduler l'en-tête de trame ; dans lequel le fait que la première puissance reçue remplit une condition prédéfinie comprend : $\left|10⋅log10\left(\frac{{P}_{1}}{{P}_{2}}\right)\right| \leq S$, où
P₁ est la première puissance reçue, P₂ est la deuxième puissance reçue, la deuxième puissance reçue est une puissance reçue de la première séquence de préambule, et S est un seuil prédéfini ;
la réalisation, par le dispositif terminal de réception (20), d'une estimation de canal sur la base de la deuxième partie, pour obtenir un résultat d'estimation de canal ; et
la démodulation, par le dispositif terminal de réception (20), de la charge utile sur la base du deuxième gain et du résultat d'estimation de canal ;
dans lequel lorsque la première puissance reçue ne remplit pas la condition prédéfinie, l'ajustement du premier gain sur la base des informations d'estimation de canal supplémentaires, pour obtenir le deuxième gain.

2. Procédé selon la revendication 1, dans lequel l'en-tête de trame comprend en outre des deuxièmes informations d'indication, et les deuxièmes informations d'indication sont utilisées pour indiquer une quantité de symboles transportant les informations d'estimation de canal supplémentaires et un type de symboles transportant les informations d'estimation de canal supplémentaires.

3. Procédé selon la revendication 1 ou 2, dans lequel une limite supérieure de la première plage de fréquences est inférieure ou égale à une limite inférieure de la deuxième plage de fréquences.

4. Procédé selon l'une quelconque des revendications 1 à 3, dans lequel l'au moins un symbole est une deuxième séquence de préambule, et la deuxième séquence de préambule comprend au moins une première séquence de préambule ; ou l'au moins un symbole est au moins deux symboles d'estimation de canal supplémentaires, ACE.

5. Appareil de communication (1000), dans lequel l'appareil comprend un processeur (1001) et un émetteur-récepteur ;
le processeur (1001) est configuré pour : démoduler un en-tête de trame sur la base d'une première séquence de préambule après que l'émetteur-récepteur (1002) a reçu la première séquence de préambule et l'en-tête de trame d'une trame de données dans une première plage de fréquences, et démoduler une charge utile de la trame de données sur la base d'informations d'estimation de canal supplémentaires de la trame de données lorsque l'en-tête de trame comprend des premières informations d'indication ; et
les informations d'estimation de canal supplémentaires et la charge utile sont reçues par l'émetteur-récepteur (1002) dans une deuxième plage de fréquences, une puissance correspondant à une première densité spectrale de puissance, PSD, est comprise dans la première plage de fréquences, une puissance correspondant à une deuxième PSD est comprise dans la deuxième plage de fréquences, la première PSD est différente de la deuxième PSD, les informations d'estimation de canal supplémentaires sont situées entre l'en-tête de trame et la charge utile et sont transportées sur au moins un symbole, et les premières informations d'indication sont utilisées pour indiquer qu'un type de la trame de données est un premier type de trame de données ;
dans lequel l'au moins un symbole comprend une première partie et une deuxième partie ; la première partie est utilisée pour la commande automatique de gain, AGC, et la deuxième partie est utilisée pour l'estimation de canal ; et
le fait que le processeur (1001) soit configuré pour démoduler une charge utile de la trame de données sur la base d'informations d'estimation de canal supplémentaires de la trame de données lorsque l'en-tête de trame comprend des premières informations d'indication comprend spécifiquement :
le processeur (1001) est configuré pour : déterminer une première puissance reçue sur la base de la première partie lorsque l'en-tête de trame comprend les premières informations d'indication, la première puissance reçue étant une puissance reçue de la première partie ; lorsque la première puissance reçue remplit une condition prédéfinie, déterminer qu'un deuxième gain est un premier gain ; le fait que la première puissance reçue remplit une condition prédéfinie comprenant : $\left|10⋅log10\left(\frac{{P}_{1}}{{P}_{2}}\right)\right| \leq S$, où
P₁ est la première puissance reçue, P₂ est une deuxième puissance reçue, la deuxième puissance reçue est une puissance reçue de la première séquence de préambule, et S est un seuil prédéfini ; réaliser une estimation de canal sur la base de la deuxième partie, pour obtenir un résultat d'estimation de canal ; et démoduler la charge utile sur la base du deuxième gain et du résultat d'estimation de canal, le deuxième gain étant un gain utilisé pour démoduler la charge utile, et le premier gain étant un gain utilisé pour démoduler l'en-tête de trame ; lorsque la première puissance reçue ne remplit pas la condition prédéfinie, ajuster le premier gain sur la base des informations d'estimation de canal supplémentaires, pour obtenir le deuxième gain.

6. Appareil de communication (1000) selon la revendication 5, dans lequel l'en-tête de trame comprend en outre des deuxièmes informations d'indication, et les deuxièmes informations d'indication sont utilisées pour indiquer une quantité de symboles transportant les informations d'estimation de canal supplémentaires et un type de symboles transportant les informations d'estimation de canal supplémentaires.

7. Appareil de communication (1000) selon la revendication 5 ou 6, dans lequel une limite supérieure de la première plage de fréquences est inférieure ou égale à une limite inférieure de la deuxième plage de fréquences.

8. Support de stockage lisible par ordinateur comportant des instructions, dans lequel, lorsque les instructions sont exécutées sur un ordinateur, l'ordinateur est configurer pour réaliser le procédé selon l'une quelconque des revendications 1 à 4.

9. Produit programme informatique comportant des instructions, dans lequel lorsque les instructions sont exécutées sur un ordinateur, l'ordinateur est configuré pour réaliser le procédé selon l'une quelconque des revendications 1 à 4.
